**Europäisches Patentamt**

**European Patent Office**

**Office européen des brevets**

(19)

(11) Veröffentlichungsnummer: **0 146 098**
**A2**

# (12) EUROPÄISCHE PATENTANMELDUNG

(21) Anmeldenummer: **84114981.8**

(22) Anmeldetag: **08.12.84**

(51) Int. Cl.⁴: **C 04 B 26/02**

---

(30) Priorität: **10.12.83 DE 3344783**

(43) Veröffentlichungstag der Anmeldung: **26.06.85**
**Patentblatt 85/26**

(84) Benannte Vertragsstaaten: **AT BE CH DE FR GB IT LI LU NL SE**

(71) Anmelder: **Marquardt, Götz, Spannwisch 3, D-2000 Hamburg 72 (DE)**

(72) Erfinder: **Marquardt, Götz, Spannwisch 3, D-2000 Hamburg 72 (DE)**

(74) Vertreter: **Heldt, Gert, Dr. Dipl.-Ing., Neuer Wall 59 III, D-2000 Hamburg 36 (DE)**

---

(54) **Material zur Herstellung einer flüssigkeitsableitenden Schicht und Verfahren zu seiner Herstellung und seiner Anwendung.**

(57) Bei einem Material zur Herstellung einer flüssigkeitsableitenden Schicht aus einem Naturprodukt sind die Körner von einem Binder ummantelt und miteinander verklebt. Der Binder besteht aus einem mit einer Zusatzkomponenten aushärtenden Kunststoff. Als Zusatzkomponente kommt ein dem Binder hinzuzumischender Kunststoff in Betracht. Soweit Sauerstoff Verwendung findet, ist dieser als Anteil von Luft in Poren eingeschlossen, die zwischen den Körnern ausgebildet sind. Das Verfahren zur Herstellung einer von einem Untergrund Flüssigkeit ableitenden Schicht nach dem Vorstehenden zeichnet sich dadurch aus, daß ein Gemisch aus dem Naturprodukt und dem aus einem mit der Zusatzkomponenten aushärtenden Kunststoff bestehender Binder hergestellt wird. Das Gemisch wird auf den Untergrund verteilt und unmittelbar danach auf die Schicht eine Feuchtigkeitsabdichtung aufgebracht.

EP 0 146 098 A2

Material zur Herstellung einer flüssigkeitsableitenden Schicht und Verfahren zu seiner Herstellung und seiner Anwendung

Die Erfindung betrifft ein Material zur Herstellung einer flüssigkeit-ableitenden Schicht aus einem Naturprodukt, dessen Körner von einem Binder ummantelt und miteinander verklebt sind.

Darüber hinaus betrifft die Erfindung ein Verfahren zur
Herstellung einer von einem Untergrund Flüssigkeit ableitenden Schicht, die aus einem Material besteht, das
von einem aus Körnern bestehenden Naturprodukt gebildet ist, die mit einem Binder ummantelt und miteinander
verklebt sind.

Derartige Materialien werden aus Glaskügelchen hergestellt,
die mit Bitumen ummantelt sind. Dieser Mischung wird ein
Mischöl beigegeben, mit dessen Hilfe das Bitumen angelöst und in einen klebrigen Zustand versetzt wird. Die
mit der klebrigen Bitumenschicht ummantelten Glaskügelchen werden innig miteinander vermischt und anschließend
auf einen Untergrund aufgetragen, von dem Feuchtigkeit,
insbesondere Wasser abgeleitet werden soll. Zu diesem
Zwecke wird mit dem Material eine Gefälleschicht hergestellt, dessen Gefälle ausreicht, um zu verhindern, daß
die Feuchtigkeit nicht auf der Oberfläche stehenbleibt.
Abschließend wird auf die mit dem Material hergestellte
Schicht eine wasserabweisende Haut aufgebracht, über die
das Wasser abgeleitet wird.

Dieses Material hat sich grundsätzlich in der Praxis
zur Herstellung von Gefälleschichten bewährt. Lediglich
bei Wärmeeinwirkungen zeigt sich, daß das Bitumen plastische Eigenschaften annimmt und auf diese Weise das gesamte Material weich wird. Außerdem entstehen beim Ab-

binden des Bitumens Gase, die sich möglicherweise unter der der Wasserabdichtung dienenden Haut sammeln und diese von der Gefälleschicht abheben. Darüber hinaus ist das Material in der Lage, viel Wasser aufzunehmen. Dieses aufgenommene Wasser stellt eine dauernde Beeinträchtigung des abzudichtenden Untergrundes dar. Schließlich muß das Material an der Baustelle mit einem Lösungsmittel vermischt werden, das die Haftfähigkeit des Bitumens auslöst. Diese Vermischung muß sehr gründlich vorgenommen werden, damit die einzelnen Körner des Materials gut miteinander verkleben können. Die Güte der Durchmischung ist abhängig von der Zuverlässigkeit dessen, der die Vermischung vornehmen muß. Darüber hinaus hängt auch die Oberflächenbeschaffenheit der Gefälleschicht stark davon ab, daß sie mit großer Sachkenntnis hergestellt wird. Das mit dem Bitumen ummantelte Naturglasgranulat ist relativ grob, so daß die Herstellung einer glatten Oberfläche relativ schwierig ist. Die Oberfläche wird dadurch erzeugt, daß die Gefälleschicht mit einem Richtscheit abgezogen wird. Dabei wird das Material mit Hilfe einer über Lehren gleitenden Latte verteilt. Bei diesem Abreiben des Materials können in Folge der groben Körnung Unebenheiten in der Oberfläche entstehen.

Aufgabe der vorliegenden Erfindung ist es daher, das Material der einleitend genannten Art so zu verbessern, daß es auf der Baustelle leicht und sicher verarbeitet werden kann.

Diese Aufgabe wird erfindungsgemäß dadurch gelöst, daß der Binder aus einem mit einer Zusatzkomponenten aushärtenden Kunststoff besteht.

0146098

Dieses Material kann im verarbeitungsfertigen Zustand zu einer Baustelle geliefert werden. Der Binder wird in maschinellen Großmischern dem Naturprodukt beigegeben, so daß eine sehr innige und gleichmäßige Vermischung des Binders mit dem Naturprodukt stattfindet. Auf diese Weise ist dafür Sorge getragen, daß das Material in allen Teilen gleichmäßig durchmischt ist, so daß keine Lunkerstellen entstehen können, in denen eine Verklebung der einzelnen Materialteilchen nicht erfolgt. Beim Aushärten des Kunststoffes entsteht kein Gas, so daß unmittelbar nach Aufbringen des Materials auf den zu schützenden Untergrund die feuchtigkeitsabweisende Schicht auf das Material aufgebracht werden kann. Gasansammlungen entstehen unter dieser Schicht nicht. Schließlich nimmt dieses Material auch kaum Wasser auf, so daß der zu schützende Untergrund trocken bleibt. Schließlich hat das Material eine relativ kleine Körnung, so daß es gut abgezogen und auf diese Weise eine glatte Oberfläche gebildet werden kann. Schließlich ist die von dem mit der Zusatzkomponenten aushärtenden Kunststoff gebildete Schicht unempfindlich gegen Temperaturschwankungen. Auch bei hohen Temperaturen wird die Schicht nicht weich.

Gemäß einer bevorzugten Ausführungsform der Erfindung wird das Gemisch aus dem Naturprodukt und dem aus einem mit einer Zusatzkomponenten aushärtenden Kunststoff bestehenden Binder hergestellt, das Gemisch auf den Untergrund verteilt und unmittelbar danach auf die weiche Schicht eine Feuchtigkeitsabdichtung aufgebracht. Diese Arbeitsweise ist sehr kostengünstig, da unmittelbar nach der Aufbringung der Schicht die Feuchtigkeitsabdeckung vorgenommen werden kann bzw. nach einer recht kurzen Abbindezeit. Die jeweilige Baustelle kann zügig zum Abschluß gebracht werden, ohne daß lange Zeiten für das Abgasen der aufgebrachten Schicht einkalkuliert werden müssen. Darüber hinaus kann die Schicht unabhängig von der jeweils herrschenden Außentemperatur hergestellt werden. Die Zusatzkomponente kann beispielsweise aus einem zusätzlichen Kunststoff oder einem Gas bestehen. Sie wird unmittelbar vor der Aufbringung des Gemisches diesem zugesetzt.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

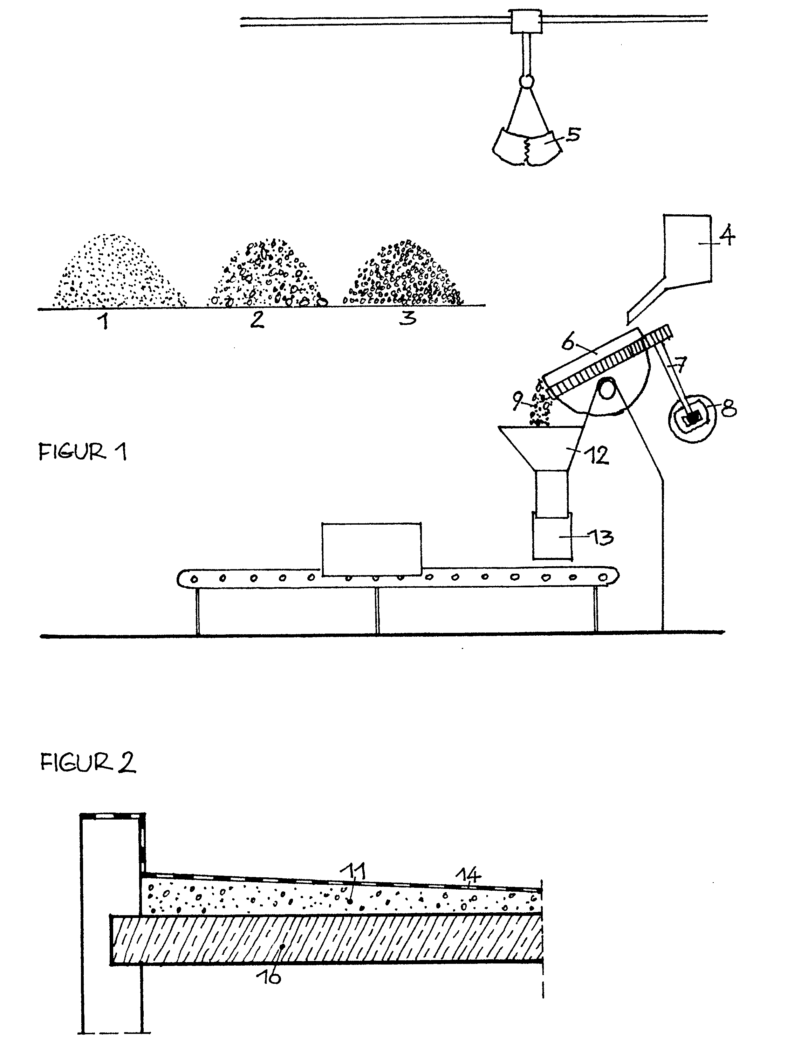

Fig. 1  Eine schematische Darstellung einer Mischungs- und Verpackungsanlage und

Fig. 2  ein schematischer Querschnitt durch eine obere Hausecke.

Das Material besteht aus drei Mischungskomponenten, von denen zwei Naturprodukte und eine dritte ein Kunststoff ist. Bei den beiden Naturprodukten handelt es sich um Quarzsand 1 und Blähton 2 andererseits. Als Kunststoff wird Polystyrol 3 verwendet. Während der Quarzsand 1 in Form von Körnern zur Anwendung kommen, liegt das Polystyrol 3 in Form von Kügelchen vor. Der Blähton 2 kann sowohl in Form von Körnern als auch in Form von Kügelchen eingesetzt werden. Vorzugsweise wird er in Form von Kügelchen verwendet. Der Quarzsand 1 besitzt eine Körnung, bei dem alle Körner einen Durchmesser bis zu 1mm besitzen. 5o % der Körner besitzen einen Durchmesser bis zu o,25mm.

Der Blähton 2 besitzt Körner mit einer Größe bis zu einem Durchmesser von 4mm. Im Regelfall liegt der Durchmesser der Körner zwischen 1 und 4mm. Die Kügelchen des Polystyrol 3 besitzen einen Durchmesser bis zu 3 mm.

Diese Mischungskomponenten werden mit einem Binder 4 vermischt, bei dem es sich um einen mit Sauerstoff aushärtenden Kunststoff handelt. In Betracht kommt beispielsweise ein Polybutadien. Von diesem Binder 4 wird den Mischungskomponenten ein Anteil von 1,5 bis 5 Vol.% zugesetzt. Am zweckmäßigsten hat sich ein Anteil des Binders 4 in Höhe von 2,o Vol.% herausgestellt.

Der Quarzsand 1, der Blähton 2 sowie das Polystyrol 3 werden von einem Hebezeug 5 in eine Mischertrommel 6 eingefüllt, die über ein Getriebe 7 von einem Motor 8 angetrieben wird. Zweckmäßigerweise wird ein Gemenge hergestellt, das zu 4o % aus Blähton 2, zu 5o % aus Polystyrol 3 und zu 1o % aus Quarzsand 1 besteht. Es ist jedoch auch denkbar, andere Gemenge herzustellen, die beispielsweise zu O bis 1oo % aus Quarzsand 1, zu O bis 1oo % aus Blähton 2 und zu 3o bis 6o % aus Polystyrol 3 bestehen. Daraus folgt, daß die flüssigkeitsableitende Schicht auch ausschließlich aus Quarzsand 1 bzw. Blähton 2 hergestellt werden kann, denen jeweils lediglich der Binder 4 zugesetzt wird. Das Gemenge aus 4o % Polystyrol 3, 45 % Blähton 2 und 15 % Quarzsand 1 hat jedoch den entschiedenen Vorteil gegenüber anderen Gemengen, daß das Gewicht dieses Gemenges für die weitaus meisten Untergründe gut zu tragen ist. Demgegenüber kann die ausschließliche Verwendung von Quarzsand 1 mit dem Binder 4 dazu führen, daß das Material 1 ein so hohes Gewicht erhält, daß es zur Aufbringung auf manche Untergründe nicht mehr geeignet ist. Darüber hinaus hat das Gemenge von 5o % Polystyrol 3, 4o·% Blähton 2 und 1o % Quarzsand 1 den Vorteil, daß es eine relativ gute Wärmedämmung für den mit ihm zu versehenden Untergrund darstellt. Außerdem sind die aus Körnern und Kügelchen bestehenden Teile dieses Gemenges so gut gemischt, daß damit gerechnet werden kann, daß alle einzelnen Teilchen des Gemenges von dem Binder 4 optimal umhüllt werden. Nach dem Aushärten des Binders 4 verkleben die einzelnen Teilchen mithin zu einer weitgehend homogenen Schicht.

Demgegenüber vergrößert sich das Gewicht des Materials erheblich, wenn es ausschließlich aus Blähton 2 oder Quarzsand 1 hergestellt wird. Jedoch ist auch in diesen Fällen damit zu rechnen, daß die einzelnen Körner von dem Binder 4 gut umhüllt werden, so daß die Herstellung einer weitgehend homogenen Schicht gewährleistet ist. Diese kann jedoch so schwer sein, daß manche Untergründe nicht geeignet sind, dieses Gewicht aufzunehmen, insbesondere wenn mit relativ großen Schichtstärken gerechnet werden muß.

Nach dem Vermischen der Mischungsbestandteile Quarzsand 1, Blähton 2 und Polystyrol 3 mit dem Binder 4 wird ein auf diese Weise entstandenes Gemisch 9 aus der Mischertrommel 6 ausgefüllt. Die mindeste Mischungsdauer beträgt etwa 3 min. Sodann muß das Gemisch 9 möglichst bald der Verarbeitung zugeführt werden, solange nicht verhindert wird, daß der Binder 4 aushärten kann. Beispielsweise ist es denkbar, die Mischertrommel 6 unmittelbar in der Nähe einer Baustelle, beispielsweise eines Flachdaches 1o aufzustellen, auf das eine Gefälleschicht 11 aufgebracht werden soll. Andererseits kann jedoch das Gemisch 9 auch in einer zentralen Herstellungsanlage, beispielsweise in einer großen Mischertrommel 6 auf Vorrat hergestellt werden. In diesem Falle wird das Gemisch 9 über einen Einfülltrichter 12 in einen Sack 13 eingefüllt. Dieser Sack 13 ist luftdicht und kann auch luftdicht verschlossen werden. Das in luftdichte Säcke 13 verpackte Gemisch 9 kann sodann auch an weiter entfernte Baustellen versandt und dort zu gegebener Zeit verarbeitet werden. Das Aushärten des Binders 4 beginnt erst, wenn der Luftsauerstoff den Binder 4 erreicht.

Die Gefälleschicht 11 wird unmittelbar nach Abbindung mit einer Feuchtigkeitsabdichtung 14 versehen, die die Gefälleschicht 11 auf ihrer dem Flachdach 1o abgewandten Seite gegen das Eindringen von Feuchtigkeit verschließt. Die Feuchtigkeitsabdichtung 14 kann unmittelbar auf die noch weiche Gefälleschicht 11 aufgebracht werden. Da beim Abbinden des Binders 4 Gase innerhalb der Gefälleschicht 11 nicht entstehen, besteht keine Notwendigkeit, das Abbinden des Binders 4 abzuwarten, bevor die Feuchtigkeitsabdichtung 14 auf die Gefälleschicht 11 aufgebracht wird.

Insbesondere das Polystyrol 3, aber auch der Blähton 2 verringern das Gewicht der Gefälleschicht 11 aufgrund ihres relativ kleinen Eigengewichtes in erheblichen Umfange. Auf diese Weise ist das Gemisch aus Quarzsand 1, Blähton 2, Polystyrol 3 und Binder 4 auch geeignet, auf relativ schwachen Untergründen verwendet zu werden. So können statt eines Flachdaches 1o auch relativ dünne Holzkonstruktionen als Untergrund für eine Gefälleschicht 11 dienen. Darüber hinaus hat insbesondere die Verwendung der leichten Mischungsbestandteile den wesentlichen Vorteil, daß das auf diese Weise hergestellte Material einen hohen Wärmedämmwert besitzt. In diesem Sinne kann die Gefälleschicht 11 auch gleichzeitig als Wärmedämmschicht Verwendung finden. Es ist sogar möglich, das Material zur Herstellung von Wärmedämmungen selbst dann zu verwenden, wenn eine Gefälleschicht 11 konstruktiv nicht vorgesehen ist.

Das Gemisch 9 wird zweckmäßigerweise in der Form hergestellt, daß zunächst die schwereren Mischungskomponenten durchmischt und erst dann die leichteren Mischungskomponenten dem Gemenge hinzugesetzt werden. So wird beispielsweise zunächst der Quarzsand 1 in die Mischertrommel 6 eingefüllt. Sodann wird der Blähton 2 hinzugefügt und innig mit dem Quarzsand 1 vermischt. Erst dann wird das Polystyrol 3 in die Mischertrommel 6 eingefüllt. Nach dem diese drei Mischungskomponenten gut miteinander vermischt worden sind, wird schließlich dem Gemenge der Binder 4 beigegeben. Dabei soll der Anteil des Binders 4 am gesamten Gemenge etwa 2,0 Vol.% betragen. Auf diese Weise wird jedem Kubikmeter des Gemenges 20 Liter Binder 4 hinzugefügt.

Das Material kann beispielsweise Verwendung finden zur Herstellung von Estrich. Darüber hinaus können mit seiner Hilfe Rohrschlitze abgedichtet und Dachanschlüsse hergestellt werden. Die mit dem Gemisch 9 hergestellte Schicht ist nach dem Aushärten des Binders 4 mechanisch relativ hoch belastbar. Insbesondere ist sie gegen Druckbelastungen beständig.

Statt eines luftaushärtenden Kunststoffes kann zur Herstellung des Binders auch ein Kunststoff verwendet werden, der mit Hilfe einer anderen Zusatzkomponenten aushärtet. Dabei ist beispielsweise daran gedacht, daß der Kunststoff mit einem anderen Kunststoff gemeinsam ein aushärtendes Gemisch bildet. Es ist jedoch auch denkbar, Zusatzkomponenten zu wählen, die aus mehreren Bestandteilen bestehen. Dabei ist insbesondere daran zu denken, daß dem den Binder bildenden Kunststoff ein weiterer Kunststoff und ein Gas, beispielsweise Sauerstoff, als Bestandteile hinzugefügt werden, die den Binder zur Aushärtung bringen.

0146098

1. Material zur Herstellung einer flüssigkeitsableitenden Schicht aus einem Naturprodukt, dessen Körner von einem Binder ummantelt und miteinander verklebt sind, dadurch gekennzeichnet, daß der Binder (4) aus einem mit einer Zusatzkomponenten aushärtenden Kunststoff besteht.

2. Material nach Anspruch 1, dadurch gekennzeichnet, daß die Zusatzkomponente ein dem Kunststoff hinzugefügter zusätzlicher Kunststoff ist.

3. Material nach Anspruch 1, dadurch gekennzeichnet, daß die Zusatzkomponente ein Gas ist.

4. Material nach Anspruch 3, dadurch gekennzeichnet, daß die Zusatzkomponente Sauerstoff ist.

5. Material nach Anspruch 1 bis 4, dadurch gekennzeichnet, daß die Zusatzkomponente aus einer Vielzahl von einzelnen Bestandteilen besteht.

6. Material nach Anspruch 1 bis 5, dadurch gekennzeichnet, daß der Sauerstoff als Anteil von Luft in Poren eingeschlossen ist, die zwischen den Körnern ausgebildet sind.

7. Material nach Anspruch 1 bis 6, dadurch gekennzeichnet, daß das Naturprodukt Quarzsand (1) ist.

8. Material nach Anspruch 1 bis 6, dadurch gekennzeichnet, daß das Naturprodukt Blähton (2) ist.

9. Material nach Anspruch 1 bis 8, dadurch gekennzeichnet, daß das Naturprodukt aus Quarzsand (1) und Blähton (2) besteht.

10. Material nach Anspruch 1 bis 9, dadurch gekennzeichnet, daß der Binder (4) ein Polybutadien enthält.

11. Material nach Anspruch 1 bis 10, dadurch gekennzeichnet, daß der Binder (4) einen Anteil von 1,5 bis 5,0 Vol.% von einem mit dem Naturprodukt hergestellten Gemenge stellt.

12. Material nach Anspruch 1 bis 11, dadurch gekennzeichnet, daß der Anteil des Binders (4) 2,0 Vol.% beträgt.

13. Material nach Anspruch 1 bis 12, dadurch gekennzeichnet, daß der Binder (4) einem Gemenge aus Naturprodukt und Polystyrol (3) zugesetzt ist.

14. Material nach Anspruch 1 bis 13, dadurch gekennzeichnet, daß das Gemenge aus Quarzsand (1) und Polystyrol (3) besteht.

15. Material nach Anspruch 1 bis 13, dadurch gekennzeichnet, daß das Gemenge aus Blähton (2) und Polystryrol (3) besteht.

16. Material nach Anspruch 1 bis 15, dadurch gekennzeichnet, daß das Gemenge aus Quarzsand (1), Blähton (2) und Polystyrol (3) besteht.

17. Material nach Anspruch 1 bis 16, dadurch gekennzeichnet, daß der Blähton (2) aus Körnern mit einem Durchmesser zwischen 1 und 4mm besteht.

18. Material nach Anspruch 1 bis 17 dadurch gekennzeichnet, daß das Polystyrol (3) aus Körnern mit einem Durchmesser bis zu 3mm besteht.

19. Material nach Anspruch 1 bis 18 dadurch gekennzeichnet, daß das Gemenge aus 30% bis 60% Polystyrol (3), o bis 1oo % Blähton (2) und o bis 1oo % Quarzsand (1) je nach dem für einen bestimmten Untergrund zulässigen Gesamtgewicht des Gemenges besteht.

2o. Material nach Anspruch 1 bis 19, dadurch gekennzeichnet, daß das Gemenge 5o % Polystyrol (3), 4o % Blähton (2) und 1o % Quarzsand (1) enthält.

21. Material nach Anspruch 1 bis 2o, dadurch gekennzeichnet, daß das mit dem mit Sauerstoff aushärtenden Binder (4) vermischte Gemenge in luftdichten Säcken (13) verpackt ist.

22. Material nach Anspruch 1 bis 2o, dadurch gekennzeichnet, daß das mit dem mit dem zusätzlichen Kunststoff aushärtenden Binder (4) vermischte Gemenge in Säcken (13) verpackt ist und der zusätzliche Kunststoff in einem gesonderten Gebinde verpackt ist.

23. Verfahren zur Herstellung einer von einem Untergrund Flüssigkeit ableitenden Schicht, die aus einem Material besteht, das von einem aus Körnern bestehenden Naturprodukt gebildet ist, die mit einem Binder ummantelt und miteinander verklebt sind, dadurch gekennzeichnet, daß ein Gemisch aus dem Naturprodukt und dem aus einem mit einer Zusatzkomponenten aushärtenden Kunststoff bestehenden Binder hergestellt wird, das Gemisch auf den Untergrund verteilt und kurz danach auf die Schicht eine Feuchtigkeitsabdichtung aufgebracht wird.

24. Verfahren nach Anspruch 23, dadurch gekennzeichnet, daß dem Kunststoff die Zusatzkomponente unmittelbar vor der Aufbringung des Gemisches auf den Untergrund zugemischt werd.

25. Verfahren nach Anspruch 23 und 24, dadurch gekennzeichnet, daß dem Kunststoff ein anderer Kunststoff als Zusatzkomponente zugemischt wird.

26. Verfahren nach Anspruch 23 bis 25, dadurch gekennzeichnet, daß dem Kunststoff eine aus mehreren Bestandteilen bestehende Zusatzkomponente zugemischt wird und das Gemisch nach einer kurzen Mischzeit auf den Untergrund aufgebracht wird.

27. Verfahren nach Anspruch 23 bis 26, dadurch gekennzeichnet, daß dem Blähton (2) der Binder (4) zugemischt wird.

28. Verfahren nach Anspruch 23 bis 26, dadurch gekennzeichnet, daß dem Quarzsand (1) der Binder (4) zugemischt wird.

29. Verfahren nach Anspruch 23 bis 26, dadurch gekennzeichnet, daß das Naturprodukt aus Quarzsand (1) und Blähton (2) gemischt wird.

30. Verfahren nach Anspruch 23 bis 29, dadurch gekennzeichnet, daß dem Naturprodukt Polystyrol (3) hinzugemischt wird.

31. Verfahren nach Anspruch 23 bis 30, dadurch gekennzeichnet, daß zuerst dem Quarzsand (1) der Binder (4) hinzugemischt wird und anschließend zunächst Blähton (2) und zuletzt Polystyrol (3) dem auf diese Weise entstandenen Gemisch hinzugefügt wird.

1/2     0146098

FIGUR 1

FIGUR 2